**Europäisches Patentamt**

**European Patent Office**

**Office européen des brevets**

(19)

(11) Veröffentlichungsnummer: **0 072 888**
**B1**

(12) # EUROPÄISCHE PATENTSCHRIFT

(45) Veröffentlichungstag der Patentschrift:
**15.01.86**

(21) Anmeldenummer: **82101173.1**

(22) Anmeldetag: **17.02.82**

(51) Int. Cl.⁴: **C 02 F 1/40**

(54) **Vorrichtung zum Abschöpfen von auf Wasser schwimmenden Stoffen.**

(30) Priorität: **24,07.81 DE 8121709 U**

(43) Veröffentlichungstag der Anmeldung:
**02.03.83 Patentblatt 83/9**

(45) Bekanntmachung des Hinweises auf die Patenterteilung:
**15.01.86 Patentblatt 86/3**

(84) Benannte Vertragsstaaten:
**BE DE FR GB IT NL SE**

(56) Entgegenhaltungen:
**DE-A-1 642 873**
**DE-A-2 418 669**

(73) Patentinhaber: **Sobinger, Dietrich, Holunderweg 84 a, D-4300 Essen 1 (DE)**

(72) Erfinder: **Sobinger, Dietrich, Holunderweg 84 a, D-4300 Essen 1 (DE)**

(74) Vertreter: **Patentanwälte Dr. Solf & Zapf, Schlossbleiche 20 Postfach 13 01 13, D-5600 Wuppertal 1 (DE)**

EP 0 072 888 B1

## Beschreibung

Die vorliegende Erfindung betrifft eine Vorrichtung zum Abschöpfen von auf Wasser schwimmenden Stoffen, insbesondere Öl, mit einer gegen die Wasseroberfläche geneigten Auflaufschrägfläche, deren vorderes Ende unterhalb und deren hinteres Ende oberhalb der Wasserlinie einschließlich Ölschicht liegt und mindestens einer Auffangöffnung in der Auflaufschrägfläche oberhalb der Wasserlinie einschließlich Ölschicht, die mit einem Auffangraum verbunden ist, wobei sich die Auflaufschrägfläche von der Unterkante des Auffangraumes nach oben erstreckt und mit dieser einen spitzen Winkel einschließt.

Weiterhin betrifft die Erfindung ein Verfahren zum Abschöpfen von auf Wasser schwimmenden Stoffen, insbesondere Öl, insbesondere unter Verwendung der Vorrichtung zum Abschöpfen von auf Wasser schwimmenden Stoffen, wobei das Wasser mit den schwimmenden Stoffen, insbesondere mit dem auf ihm schwimmenden Öl, auf eine Auflaufschrägfläche derart aufgeleitet wird, daß durch das Auflaufen die Auflaufenergie derart geschwächt wird, daß nur noch die obersten Wasserschichten mit dem darin und/oder darauf befindlichen Stoff am Ende der Auflaufschrägfläche aufgefangen werden, wobei das Niveau der Auflaufschrägfläche derart eingestellt ist, daß, in Abhängigkeit von der Strömungsgeschwindigkeit und der Wellenhöhe genügend Auflaufweg oberhalb der tatsächlichen Flüssigkeitslinie vorhanden ist.

Eine Vorrichtung und ein Verfahren der eingangs beschriebenen Art sind bereits in der europäischen Patentanmeldung 81902304.5 (EP-A-0 058 179) vorgeschlagen. Bei dieser Vorrichtung hat sich jedoch herausgestellt,daß insbesondere bei ruhigem Wasser sich vor der Auflaufschrägfläche eine Stauwelle ausbildet, die ein Auflaufen der Ölschicht auf die Schräge beeinträchtigt. Weiterhin bildet bei dieser Vorrichtung der Boden des Auffangraums gleichzeitig auch den Boden des gesamten Schwimmkörpers. Hierdurch ergeben sich insbesondere bei höherem Wellengang große Eigenbewegungen der Auflaufschrägfläche, und zwar sowohl in Längs- als auch in Querrichtung, wodurch ebenfalls die Ölübernahme verschlechtert wird.

Weiterhin ist aus der FR-A 21 57 239 bereits eine Vorrichtung zum Abschöpfen von auf Wasser schwimmenden Stoffen bekannt, wobei ebenfalls eine Auflauffläche, wie eingangs beschrieben, vorhanden ist. Hierbei ist jedoch der Schwimmkörper als Schiff ausgebildet und die Auflaufschrägfläche ist als schwenkbar gelagerter Arm gestaltet, der mit seinem vorderen Ende unterhalb der Wasserlinie endet, und zwar innerhalb eines bassinartigen Wasserraums im Schiff selbst, so daß der Auflaufschrägfläche das Schiffheck vorgelagert ist, was aber eine unerwünschte hohe Stauwelle erzeugt. Diese wird noch durch die am Heck befindlichen Schiffsschrauben verstärkt, so daß bei ruhigem Gewässer keine wirksame Abschöpfung möglich ist. Der als Auflaufschrägfläche dienende Arm ist in seiner Lage verstellbar mittels Kettenzügen befestigt. Durch diese Verstellbarkeit über die nicht starren Kettenzüge ist die Auflaufschrägfläche selbst ebenfalls nicht starr, sondern verändert sich bei Wellengang, so daß eine sichere Abschöpfung bei Wellengang ebenfalls nicht möglich ist. Darüber hinaus stellt der Innenraum des Schiffes einen Stauraum dar, der zu einem Rückstau vor der Auflaufschrägfläche führt, wobei an der Rückwand und den Seitenwänden des Innenraumes Wellen reflektiert werden,und die rücklaufenden Wellen ein Auflaufen auf die Auflauffläche erschweren bzw. verhindern. Darüber hinaus ist das die Auflaufschrägfläche aufnehmende Schiff in seiner Handbarkeit außerordentlich schwerfällig.

Weiterhin sind Ölabschöpfvorrichtungen bekannt, die mit Schrägflächen versehen sind, die bis zur Wasserlinie oder darunter abgesenkt werden z. B. GB-A- 947 026. Damit erfolgt bei diesen bekannten Vorrichtungen jedoch keine Schwächung der Wellenenergie oder einer Reduzierung der Strömungsgeschwindigkeit auf der Schrägfläche, vielmehr besitzt diese lediglich eine skimmerartige Wirkung, wodurch zwar eine Ölschicht in den Auffangraum gebracht, in diesem selbst sich jedoch keinerlei Ölschicht aufbauen kann, so daß außen und innen stets eine Ölschicht von gleicher Dicke vorhanden ist.

Der vorliegenden Erfindung liegt nun die Aufgabe zugrunde, ausgehend von der Vorrichtung der eingangs beschriebenen Art diese derart zu verbessern, daß auch bei ruhigen Gewässern eine absolut zuverlässige Ölaufnahme erfolgt und auch bei hohem Wellengang eine möglichst geringe Eigenbewegung der Auflaufschrägfläche vorhanden ist.

Erfindungsgemäß wird dies dadurch erreicht, daß die Vorderkante der Auflaufschrägfläche den tiefsten unterhalb der Wasserlinie liegenden Bereich des hinter der Auflaufschrägfläche befindlichen Vorrichtungsabschnittes bildet und an der Vorderkante der Auflaufschrägfläche ein Strömungsprofilkörper und die Auflaufschrägfläche vorzugsweise zusammen mit dem Auffangraum zwischen zwei Schwimmkörpern in Katamaranbauweise angeordnet ist. Durch diese erfindungsgemäße Ausgestaltung wird verfahrensmäßig hinter dem Profilkörper ein Unterdruck erzeugt, der das Öl über die Stauwelle vor der Auflaufschrägfläche hinüberzieht, während bei den bekannten Vorrichtungen lediglich vor der Auflaufschräge ein Überdruck auftritt. Durch die Katamaranbauweise erhält die erfindungsgemäße Vorrichtung eine besonders gute Querstabilität, so daß Rollbewegungen der Vorrichtung reduziert werden.

Die erfindungsgemäße Vorrichtung wird in einem Abschöpfverfahren eingesetzt, wobei das Wasser mit den schwimmenden Öl, auf die Auflaufschrägfläche derart aufgeleitet wird, daß durch das Auflaufen die Auflaufenergie derart geschwächt wird, daß nur noch die obersten Wasserschichten mit dem darin und/oder darauf befindlichen Stoff am Ende der Auflaufschrägfläche aufgefangen werden, wobei das Niveau der Auflaufschrägfläche derart eingestellt ist, daß in Abhängigkeit von der Strömungsgeschwindigkeit und der Wellenhöhe genügend Auflaufweg oberhalb der tatsächlichen Wasserlinie einschließlich Ölschiccht d. h. dem Flüssigkeitsniveau vor dem Auftreffen auf die Auflaufschrägfläche vorhanden ist. Hierbei ist erfindungsgemäß vorgesehen, hinter der Vorderkante der Auflaufschrägfläche einen Unterdruck zu erzeugen und weiterhin eine Wirbelfreiheit im Bereich der Auflaufschrägfläche zu gewährleisten.

Vorteilhafte Ausführungen der Erfindung sind in den Unteransprüchen 2 bis 17 enthalten.

Anhand der in den beiliegenden Zeichnungen dargestellten Ausführungsbeispiele wird die Erfindung nun näher erläutert.

Es zeigen:

Fig. 1 eine Aufsicht auf eine Ausführungsform einer erfindungsgemäßen Vorrichtung,

Fig. 2 einen Schnitt entlang der Schnittlinie II - II in Fig. 1,

Fig. 3 eine Detailansicht der erfindungsgemäßen Vorrichtung im Bereich des oberen Bereiches der Auflaufschrägfläche,

Fig. 4 eine Aufsicht auf eine weitere Ausführungsform einer erfindungsgemäßen Vorrichtung.

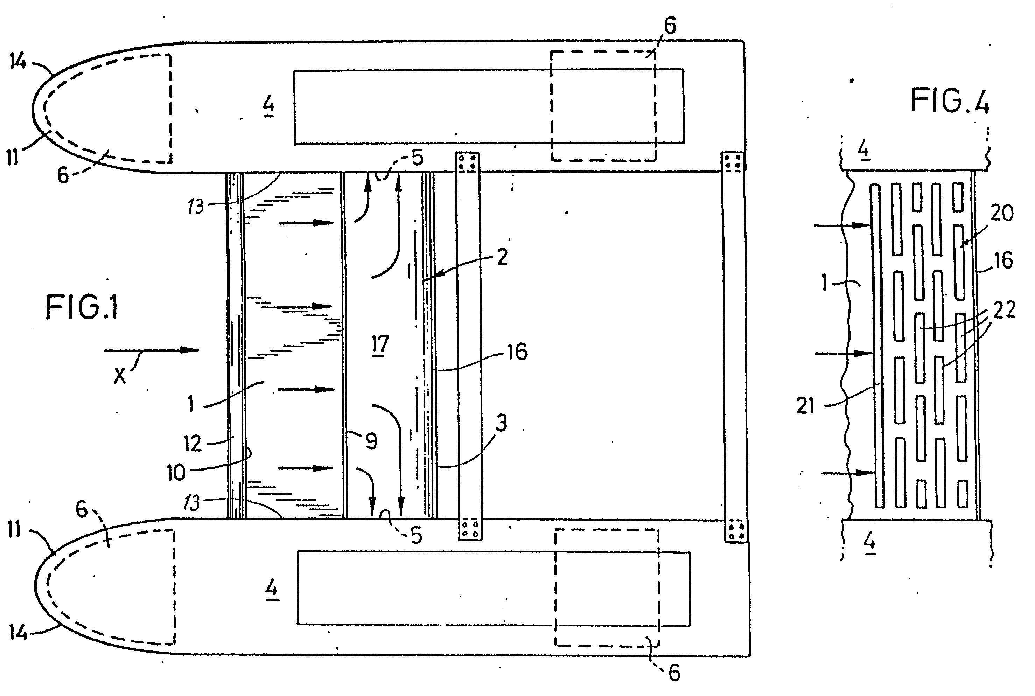

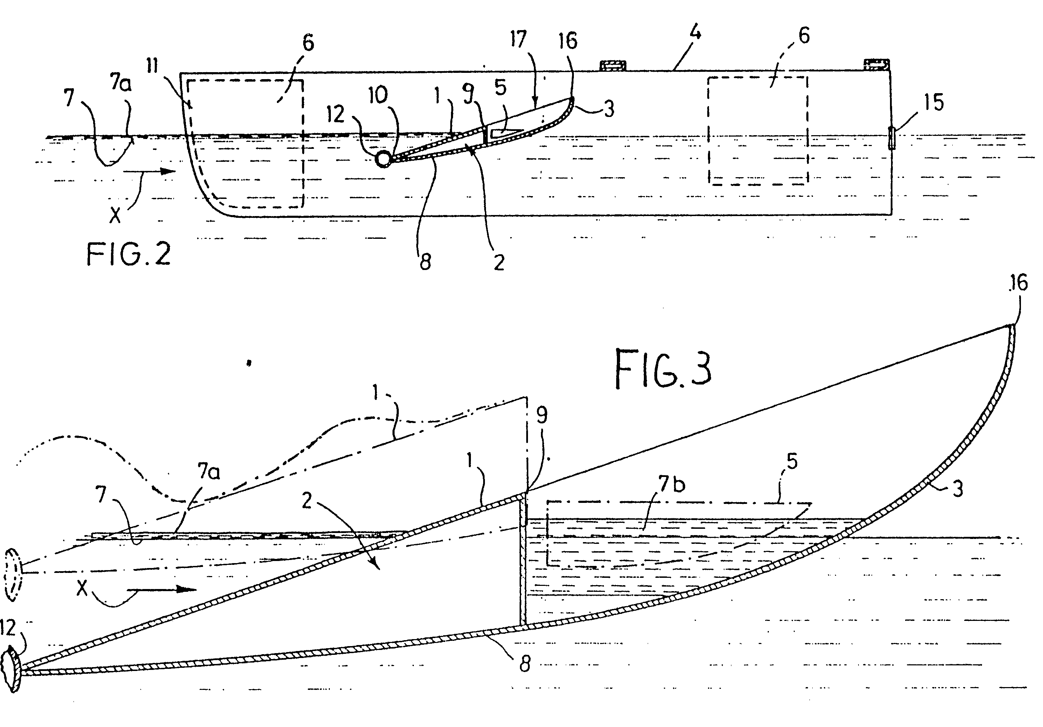

Wie in Fig. 1 und 2 dargestellt, besteht eine erfindungsgemäße Vorrichtung aus einer Auflaufschrägfläche 1, die beispielsweise aus einer Stahlblechplatte hergestellt ist und die Frontseite eines Auffangbehälters 2 mit einer Rückwand 3 bildet. Der Auffangbehälter 2 ist zwischen zwei Schwimmkörpern 4 angeordnet, so daß die erfindungsgemäße Vorrichtung dem Aufbau eines Katamarans entspricht. Der Innenraum der Schwimmkörper 4 dient zur Aufnahme des aufgefangenen Öl-Wassergemischs und ist über seitliche Öffnungen 5 mit dem Innenraum des Behälters 2 verbunden.

Die Funktion der erfindungsgemäßen Vorrichtung in nun wie folgt. In den Schwimmkörpern 4 befinden sich flut-und lenzbare Tanks 6, durch deren Füllung bzw. Entleerung mit Wasser die Schwimmkörper 4 in bezug auf ihren Tiefgang reguliert werden können. Um mittels der erfindungsgemäßen Vorrichtung z. B. Öl von einer Wasseroberfläche abschöpfen zu können, werden die Schwimmkörper 4 derart abgesenkt, daß die Wasserlinie 7 mit einer Ölschicht 7a oberhalb der Unterkante 8 des Behälters 2, aber unterhalb der Überlaufkante 9 der Auflaufschrägfläche 1 verläuft, siehe Fig. 3. Dabei stellt die eingezeichnete Flüssigkeitslinie 7, 7a den Zustand vor dem Auflaufen auf den oberhalb derselben befindlichen Abschnitt der Auflaufschrägfläche 1 dar. Hierbei ist erfindungsgemäß die Länge des oberhalb der Flüssigkeitslinie 7, 7a liegenden Teils der Auflaufschrägfläche 1 bis zur Überlaufkante 5 derart gewählt, daß das gegen diesen Teil aufgrund der Wasserströmung, wie durch den Pfeil X eingezeichnet ist, auflaufende Wasser-Ölgemisch in seiner Strömungsgeschwindigkeit derart abgebremst bzw. in seiner Strömungsenergie derart geschwächt wird, daß nur noch die obersten Wasserschichten mit dem darauf und darin befindlichen Öl bis zum Ende der Auflaufschrägfläche 1 gelangen und über die Überlaufkante 9 in den Behälter 2 laufen. Hierbei wird das Öl aufgrund des geringeren spezifischen Gewichts als dem von Wasser und aufgrund dessen, daß die Reibung zwischen der Ölschicht und der Wasseroberfläche praktisch Null ist, höher die Auflaufschrägfläche hinaufgetrieben als das Wasser, wodurch eine erhebliche Abschöpfleistung erreicht wird. So wurden in Versuchen bei einer Ölschicht 7a von 0,5 mm 80 % Öl und nur 20 % Wasser abgeschöpft. Die Überlaufkante 9 war bei einer Strömungsgeschwindigkeit von rd. einem Meter pro Sekunde hierbei 100 mm über der Ölschicht 7a gelegen. Aus Fig. 3 ist weiterhin zu erkennen, wie z. B. durch Anheben der Auflaufschrägfläche 1 bei Wellengang, siehe die strichpunktierte Darstellung, eine Verlängerung des Auflaufwegs erzeugt wird, um eine ausreichende Brechung und Schwächung der Wellen zu erreichen.

Weiterhin ist nach der Erfindung vorgesehen, daß die Vorderkante 10 der Auflaufschrägfläche 1 soweit nach unten geführt ist, daß diese stets unter der Wasseroberfläche liegt, und zwar auch bei Wellengang, so daß auch die Wellentäler stets auf der Auflaufschrägiiache auflaufen. Es wird somit vermieden, daß eine Welle unter der erfindungsgemäßen Vorrichtung herläuft. Durch die Ausgestaltung der erfindungsgemäßen Vorrichtung in Katamaranbauweise und dadurch, daß die Vorderkante 10 gegenüber der Spitze 11 der Schwimmkörper 4 nach innen zurückversetzt ist, wird jeweils genügend Auftrieb durch die vorstehenden Schwimmkörperabschnitte erzeugt, wodurch ein zu tiefes Eintauchen der Auflaufschrägfläche 1 verhindert wird.

In weiterer vorteilhafter Ausgestaltung ist es zweckmäßig, und zwar insbesondere für große seegängige erfindungsgemäße Vorrichtungen, wenn die Überlaufkante 9 der Auflaufschrägfläche 1 in der senkrechten Ebene durch das Megazentrum der erfindungsgemäßen Vorrichtung liegt, da in diesem Bereich die Längsun Querbewegungen der Vorrichtung am geringsten sind. Ei weiterer Vorteil der Katamaranbauweise ist der, daß sich die Vorrichtung zum Einsatzert hin auf den ungefluteten Schwimmkörpern bewegen läßt. Hierbei sind dann nur die Schwimmkörper 4 selbst im Wasser und die Vorderkante 10, die den tiefsten Abschnitt der Auflaufschrägfläche 1 bildet, liegt über Wasser, so daß sich hierbei eine erhebliche Widerstandsreduzierung ergibt. Erst beim Eintreffen am Einsatzort wird dann die erfindungsgemäße Vorrichtung entsprechend dem jeweils vorhandenen Seegang geflutet und die Auflaufschrägfläche eingetaucht.

Wie bereits ausgeführt ist, ist erfindungsgemäß vorgesehen, daß beim Einsatz der erfindungsgemäßen Vorrichtung die Vorderkante 10 stets der unterste Teil unter Wasser ist, d. h. daß die Unterkante 8 entweder in derselben Ebene oder höher liegt als die Vorderkante 10. Hierbei schließt die Auflaufschrägfläche 1 mit dem Behälterboden bzw. der Rückwand 3 einen spitzen Winkel ein. Es wird somit erreicht, daß eine Wirbelbildung vor der Auflaufschrägfläche 1 vermieden wird. Weiterhin ist ein wesentliches Merkmal der Erfindung, wenn der Vorderkante 10 ein Strömungsprofilkörper 12 über ihre gesamte Breite vorgelagert ist. Hierdurch wird hinter diesem ein Unterdruck erzeugt, der daß auf dem Wasser schwimmende Öl über die sich ergebende Stauwelle hinüberzieht. Dieser Strömungskörper 12 kann einen kreisförmigen oder tropfenförmigen Querschnitt besitzen und wird dimensioniert in Anpassung an die Strömungsgeschwindigkeit.

Wie sich aus Fig. 1 ergibt, verlaufen die seitlichen Begrenzungswände 13 der Auflaufschrägfläche 1 parallel zueinander, wodurch im Bereich der Auflaufschrägfläche 1 jegliche Wirbelbildung insbesondere durch Reflexion vermieden wird. Die vorstehenden Abschnitte 14 der Schwimmkörper 4 sind zweckmäßigerweise vorne abgerundet bzw. keilförmig ausgebildet, um eine anliegende Strömung zu erreichen und somit eine Wirbelbildung in diesem Bereich auszuschließen.

Über die seitlichen Öffnungen 5 gelangt das im Behälter 2 aufgefangene Wasser-Ölgemisch in die seitlichen Schwimmkörper 4. Deren Volumen ist erfindungsgemäß derart bemessen, daß das Öl genügend Zeit hat, um sich vom Wasser abzusetzen, während das Wasser über Öffnungen 15 im Boden oder vorzugsweise in der Heckwand der Schwimmkörper 4 austritt. Diese Öffnungen 15 befinden sich vorteilhafterweise aus Strömungsgründen im hinteren Abschnitt der Schwimmkörper 4. In dem Behälter 2 und den Schwimmkörpern 4 kann, wie in Fig. 3 gezeigt ist, eine Ölschicht 7b aufgebaut werden. Wird beispielsweise von einer Ölschicht 7a außerhalb des Geräts von 5 mm ausgegangen, kann durch das Auffangen des Öls im Behälter innerhalb desselben und in den Schwimmkörpern eine Ölschicht von 100 mm oder mehr aufgebaut werden, die mit ca. 85 mm oder mehr unterhalb des außenliegenden Wasser-Ölspiegels 7, 7a ist und mit 15 mm oder mehr im Behälter über der außenliegenden Flüssigkeitslinie 7, 7a liegt, so daß, wie dieses Beispiel zeigt, bei 200 mm Abstand der Überlaufkante 9 von von der Linie 7, 7a innerhalb des Behälters 2 eine Überlaufhöhe von ca. 185 mm oder mehr übrigbleibt. Der höhere Ölspiegel innerhalb des Behälters als außerhalb ergibt sich aus dem geringeren spezifischen Gewicht des Öls.

Wie in Fig. 2 gezeigt, liegt die Oberkante 16 der Rückwand 3 oberhalb der Überlaufkante 9, und zwar in Verlängerung der Auflaufschrägfläche 1, so daß auf jeden Fall erreicht wird, daß möglichst wenig Wasser-Ölgemisch über die Öffnung 17 des Behälters 2 hinausgespült und somit alles die Auflaufschrägfläche 1 hinauflaufende Wasser-Ölgemisch aufgefangen wird.

Weiterhin ist in den Schwimmkörpern 4 eine in der Höhe verstellbare Ölabsaugvorrichtung vorgesehen, mit der das angesammelte Öl abgepumpt werden kann.

In Fig. 4 ist eine alternative Ausführungsform einer erfindungsgemäßen Vorrichtung dargestellt, wobei jedoch gleiche Teile wie in Fig. 1 und 2 mit denselben Bezugsziffern versehen sind. Hierbei ist die Auflaufschrägfläche 1 mit einer Vielzahl von Auffangöffnungen 20 versehen. Dabei ist die vorderste Auffangöffnung 21 als Schlitz ausgebildet, der sich über die gesamte Breite der Auflaufschrägfläche 1 erstreckt. In Auflaufrichtung hinter dieser Auffangöffnung 21 befindet sich eine Mehrzahl von nebeneinander und übereinander angeordneten schlitzförmigen Auffangöffnungen 22, dabei sind diese Auffangöffnungen 22 derart nebeneinander und übereinander angeordnet, daß die jeweils oberen Auffangöffnungen über den Zwischenräumen zwischen den unteren Auffang-Öffnungen angeordnet sind. Anstelle der Kombination eines durchgehenden vorderen Schlitzes mit dahinter angeordneten, versetzen Auffangöffnungen 22 können auch ausschließlich derartige Auffangöffnungen über die gesamte Aufläuffläche verteilt sein. Hierbei ist jedoch die Anordnung der Auffangöffnungen 22 derart vorgesehen, daß derjenige Abschnitt der Auflaufschrägfläche 1, der maximal unterhalb der Wasserlinie einschließlich Ölschicht liegen kann, keine Auffangöffnungen aufweist.

Weiterhin kann vorgesehen sein, daß die erfindungsgemäße Vorrichtung mit einem eigenen Antrieb versehen ist, der an dem der Auflaufschrägfläche 1 gegenüberliegenden Ende der Vorrichtung angeordnet ist. Im übrigen kann die erfindungsgemäße Vorrichtung durch ein Fremdfahrzeug geschoben werden.

Das erfindungsgemäße Abschöpfverfahren basiert darauf, daß die Überlaufkante der Auflaufschrägfläche in jedem Fall nicht nur oberhalb der Wasserlinie sondern auch oberhalb der auf der Wasseroberfläche schwimmenden Ölschicht ist, und zwar immer so hoch, daß die Auflaufschrägfläche nur mit einer entsprechenden Strömungsgeschwindigkeit, die entweder durch eine Strömung des Wassers oder aber eine Bewegung der erfindungsgemäßen Abschöpfvorrichtung oder durch beides erzeugt werden kann, überwunden wird. Sobald das abgeschöpfte Wasser-Ölgemisch über die Überlaufkante gelaufen ist, ergibt sich erfindungsgemäß erst die Möglichkeit,im Auffangbehälter die aufgenommenen Ölschichten übereinander zu schichten, wobei ein genügend großer Sicherheitsabstand zur Überlaufkante 9 vorhanden ist, und zwar durch die vorgenommmene Einstellung der oberhalb des Flüssigkeitsniveaus liegenden Auflaufschrägfläche, so daß ein Rückschwappen auch bei Wellengang verhindert wird. Hierdurch wird es möglich, das derart übereinander geschichtete Öl mittels einer entsprechenden Vorrichtung abzuziehen.

**Patentansprüche**

1. Vorrichtung zum Abschöpfen von auf Wasser schwimmenden Stoffen, insbesondere Öl, mit einer gegen die Wasseroberfläche geneigten Auflaufschrägfläche (1), deren vorderes Ende (10) unterhalb und deren hinteres Ende (9) oberhalb der Wasserlinie (7) einschließlich Ölschicht (7a) liegt, und mindestens einer Auffangöffnung (17) in der Auflaufschrägfläche (1) oberhalb der Wasserlinie einschließlich Ölschicht, die mit einem Auffangraum (2) verbunden ist und die Auflaufschrägfläche mit der Unterkante (8) des Auffangraums einen spitzen Winkel einschließt und sich von dieser nach oben erstreckt und die Auflaufschrägfläche mit dem Auffangraum (2) einen Teil eines Schwimmkörpers bildet, dadurch gekennzeichnet, daß die Vorderkante (10) der Auflaufschrägfläche (1) den tiefsten unterhalb der Wasserlinie (7) liegenden Bereich des hinter der Auflaufschrägfläche (1) befindlichen Vorrichtungsabschnittes bildet und an der Vorderkante über die gesamte Breite der Auflaufschrägfläche ein Strömungsprofilkörper (12) angeordnet ist.

2. Vorrichtung nach Anspruch 1, dadurch gekennzeichnet, daß die Auflaufschrägfläche (1) mit dem Auffangraum (2) zwischen zwei Schwimmkörpern (4) in Katamaranbauweise angeordnet ist.

3. Vorrichtung nach Anspruch 2, dadurch gekennzeichnet, daß die Vorderkante (10) der Auflaufschrägfläche (1) gegenüber der Spitze (11) der Schwimmkörper (4) in Strömungsrichtung des auflaufenden Wasser-Ölgemischs nach innen zurückversetzt angeordnet ist.

4. Vorrichtung nach Anspruch 2 oder 3, dadurch gekennzeichnet, daß die gegenüber der Auflaufschrägfläche (1) vorstehenden Abschnitte (14) der Schwimmkörper (4) strömungsgünstig an ihrer Innen- und Außenseite ausgebildet sind.

5. Vorrichtung nach einem oder mehreren der Ansprüche 2 bis 4, dadurch gekennzeichnet, daß in den Schwimmkörpern (4) ein Hohlraum ausgebildet ist, der über seitliche Öffnungen (5) mit dem Innenraum des Behälters (2) verbunden ist.

6. Vorrichtung nach Anspruch 5, dadurch gekennzeichnet, daß in den Böden der Schwimmkörper (4) vorzugsweise im hinteren Bereich derselben Öffnungen (15) ausgebildet sind.

7. Vorrichtung nach einem oder mehreren der Ansprüche 1 bis 6, dadurch gekennzeichnet, daß die seitlichen Begrenzungswände (13) der Auflaufschrägfläche (1) parallel zueinander verlaufen.

8. Vorrichtung nach einem oder mehreren der Ansprüche 1 bis 7, dadurch gekennzeichnet, daß die Oberkante (16) der Rückwand (3) des Behälters (2) oberhalb der Überlaufkante (9) der Auflaufschrägfläche (1), und vorzugsweise in Verlängerung der Auflaufschrägfläche (1) ausgebildet ist.

9. Vorrichtung nach einem oder mehreren der Ansprüche 1 bis 8, dadurch gekennzeichnet, daß in den Schwimmkörpern (4) flut- bzw. lenzbare Flüssigkeitstanks (6) angeordnet sind.

10. Vorrichtung nach einem oder mehreren der Ansprüche 2 bis 9, dadurch gekennzeichnet, daß das Volumen der Schwimmkörper (4) in Anpassung an die Absetzzeit von Öl in dem aufgenommenen Wasser-Ölgemisch bemessen ist, so daß das Öl sich vom Wasser absetzen kann.

11. Vorrichtung nach einem oder mehreren der Ansprüche 1 bis 10, dadurch gekennzeichnet, daß mehrere schlitzförmige Auffangöffnungen (20, 21) im Abstand nebeneinander und übereinander in der Auflaufschrägfläche (1) angeordnet sind.

12. Vorrichtung nach Anspruch 11, dadurch gekennzeichnet, daß die Auffangöffnungen (21) derart übereinander versetzt angeordnet sind, daß die jeweils oberen Auffangöffnungen oberhalb der Zwischenräume zwischen den unteren Auffangöffnungen (21) angeordnet sind.

13. Vorrichtung nach einem oder mehreren der Ansprüche 1 bis 12, dadurch gekennzeichnet, daß an der der Auflaufschrägfläche (1) gegenüberliegenden Seite der Vorrichtung eine Antriebsvorrichtung vorgesehen ist.

14. Vorrichtung nach einem oder mehreren der Ansprüche 1 bis 13, dadurch gekennzeichnet, daß in den Schwimmkörpern (4) im Absetzbereich des Öls eine Absaugvorrichtung angeordnet ist.

15. Vorrichtung nach einem oder mehreren der Ansprüche 3 bis 14, dadurch gekennzeichnet, daß die Überlaufkante (9) in der senkrechten durch das Megazentrum verlaufenden Ebene der Vorrichtung liegt.

16. Verfahren zum Abschöpfen von auf Wasser schwimmenden Stoffen, insbesondere Öl, insbesondere unter Verwendung der Vorrichtung gemäß den Ansprüchen 1 bis 15, wobei das Wasser mit den schwimmenden Stoffen, insbesondere mit dem auf ihm schwimmenden Öl, auf eine Auflaufschrägfläche derart aufgeleitet wird, daß durch das Auflaufen die Auflaufenergie derart geschwächt wird, daß nur noch die obersten Wasserschichten mit dem darin und/oder darauf befindlichen Stoff am Ende der Auflaufschrägfläche aufgefangen werden, wobei das Niveau der Auflaufschrägfläche derart eingestellt ist, daß in Abhängigkeit von der Strömungsgeschwindigkeit und der Wellenhöhe genügend Auflaufweg oberhalb der tatsächlichen Flüssigkeitslinie vorhanden ist, dadurch gekennzeichnet, daß hinter der Vorderkante oberhalb des unterhalb der tatsächlichen Flüssigkeitslinie liegenden Bereichs der Auflaufschrägfläche ein Unterdruck erzeugt wird.

17.Verfahren nach Anspruch 16, <u>dadurch gekennzeichnet</u>, daß das auflaufende Wasser-Ölgemisch im Bereich der Auflaufschrägfläche reflexionsfrei geführt wird.

## Claims

1. Device for skimming off substances which are supernatent on water, more particularly oil, having an abutting inclined surface (1), which is inclined towards the surface of the water and the front end (10) of which lies below and the back end (9) above the water level (7) including the oil layer (7a), and having at least one collecting mouth (17) in the abutting inclined surface (1) above the water level including the oil layer, which mouth is connected to a collecting chamber (2), and the abbuting surface forms an acute angle with the underside (8) of the collecting chamber and extends upwards away from the said underside and, together with the collecting space (2), the abutting inclined surface forms part of a floating body, characterised in that the front edge (10) of the abutting inclined surface (1) forms the deepest region lying below the water level (7) of the portion of the device situated behind the abutting inclined surface (1), and a flow-profiled body (12) is arranged on the front edge over the entire width of the abutting surface.

2. Device according to claim 1. characterised in that the abutting inclined surface (1) with the collecting chamber (2) is arranged between two floating bodies (4) in the manner of a catamaran construction.

3. Device according to claim 2. characterised in that. with respect to the tip of the floating body (4), the front edge (10) of the abutting inclined surface (1) is arranged off-set towards the rear in the direction of flow of the abutting water-oil mixture.

4. Device according to claim 2 or 3, characterised in that the sections (14) of the floating body (4) which project with respect to the abutting inclined surface (1) are formed in a flow-enhancing manner on their inner and outer surfaces.

5. Device according to one or more of the claims 2 to 4. characterised in that a hollow space is formed in the floating body (4) and is connected to the inner chamber of the container (2) via lateral openings (5).

6. Device according to claim 5, characterised in that the openings (15) are formed in the bases of the floating bodies (4), preferably at the rear thereof.

7. Device according to one or more of the claims 1 to 6, characterised in that the lateral boundary walls (13) of the abutting inclined surface (1) extend parallel to one another.

8. Device according to one or more of the claims 1 to 7, characterised in that the upper edge (13) of the rear wall (3) of the container (2) is formed above the overflow edge (9) of the abutting inclined surface (1), and preferably in the extension of the abutting inclined surface (1).

9. Device according to one or more of the claims 1 to 8, characterised in that fluid tanks (6), which can be flooded and drained, are arranged in the floating bodies (4).

10. Device according to one or more of the claims 2 to 9, characterised in that the volume of the floating body (4) is dimensioned so that it is adapted to the time required for the separating out of oil in the received water-oil mixture, so that the oil can separate out from the water.

11. Device according to one or more of the claims 1 to 10, characterised in that a plurality of slot-shaped collection mouths (20, 21) are arranged spaced apart adjacent to one another and above one another in the abutting inclined surface (1).

12. Device according to claim 11, characterised in that the collection mouths (21) are arranged offset above one annother, such that the upper collection mouths are arranged in each case above the spaces between the lower collection mouths (21).

13. Device according to one or more of the claims 1 to 12, characterised in that a drive mechanism is provided on the side of the device opposite the abutting inclined surface (1).

14. Device according to one or more of the claims 1 to 13, characterised in that a suction device is provided in the floating bodies (4) in the separating-out region of the oil.

15. Device according to one or more of the claims 3 to 14, characterised in that the overflow edge (9) lies in the vertical plane extending through the metacentre of the device.

16. Process for skimming off substances which are supernatent on water, more particularly oil, more particularly using the device according to claims 1 to 15, the water with the supernatent substances, more particularly with supernatent oil, being guided onto an abutting inclined surface in such a manner that the abutting energy is reduced by the abutting such that only the uppermost layers of water with the substance above it or contained within it is taken up at the end of the abutting inclined surface, the level of the abutting inclined surface being adjusted such that, in accordance with the flow velocity and the height of the waves, a sufficiently long abutting path is provided above the actual fluid level, characterised in that an underpressure is created behind the front edge above the region of the abutting inclined surface situated below the actual fluid level.

17. Process according to claim 16, characterised in that the abutting water-oil mixture is guided in a spatter-free manner in the region of the abutting inclined surface.

## Revendications

1. Dispositif pour enlever des substances, en particulier de l'huile, flottant à la surface de l'eau, comportant une surface de montée (1) inclinée par rapport à la surface de l'eau, dont l'extrémité antérieure (10) est située au-dessous et l'extrémité postérieure (9) au-dessus de la ligne de flottaison (7) y compris la couche d'huile (7a), et au moins une ouverture réceptrice (17) dans la surface de montée (1) au-dessus de la ligne de flottaison y compris la couche d'huile, reliée à un espace récepteur (2), la surface de montée formant avec le bord inférieur (8) de l'espace récepteur un angle aigu et s'étendant vers le haut à partir de celui-ci et la surface de montée constituant avec l'espace récepteur (2) une partie d'un flotteur, caractérisé en ce que le bord antérieur (10) de la surface de montée (1) constitue la région située le plus bas au-dessous de la ligne de flottaison (7) de la partie du dispositif qui se trouve derrière la surface de montée (1), et qu'un corps à profil hydrodynamique (12) est disposé au bord antérieur sur toute la largeur de la surface de montée.

2. Dispositif selon la revendication 1, caractérisé en ce que la surface de montée (1) est disposée avec l'espace récepteur (2) entre deux flotteurs (4) en une structure de catamaran.

3. Dispositif selon la revendication 2, caractérisé en ce que le bord antérieur (10) de la surface de montée (1) est disposé par rapport à la pointe (11) des flotteurs (4) d'une façon rétractée vers l'intérieur dans le sens d'écoulement du mélange montant eau-huile.

4. Dispositif selon la revendication 2 ou la revendication 3, caractérisé en ce que les sections (14) des flotteurs (4) qui dépassent par rapport à la surface de montée (1) présentent sur leurs côtés intérieur et extérieur une configuration favorable à l'écoulement.

5. Dispositif selon une ou plusieurs des revendications 2 à 4, caractérisé en ce que dans les flotteurs (4) est formé un espace creux relié à l'espace interne du bac (2) par l'intermédiaire d'ouvertures latérales (5).

6. Dispositif selon la revendication 5, caractérisé en ce que des ouvertures (15) sont formées dans le fond des flotteurs (4), de préférence dans la région arrière de ceux-ci.

7. Dispositif selon une ou plusieurs des revendications 1 à 6, caractérisé en ce que les parois de limitation latérales (13) de la surface montante (1) s'étendent parallèlement l'une à l'autre.

8. Dispositif selon l'une ou plusieurs des revendications 1 à 7, caractérisé en ce que le bord supérieur (16) de la paroi arrière (3) du bac (2) est formée au-dessus du bord-déversoir (9) de la surface montante (1), et de préférence dans le prolongement de la surface montante (1).

9. Dispositif selon l'une ou plusieurs des revendications 1 à 8, caractérisé en ce que, dans les flotteurs (4) sont disposés des réservoirs à liquides (6) pouvant être noyés et évacués.

10. Dispositif selon une ou plusieurs des revendications 1 à 9, caractérisé en ce que la valeur du volume des flotteurs (4) est adaptée au temps de décantation de l'huile dans le mélange eau-huile recueilli, de façon que l'huile puisse se séparer de l'eau.

11. Dispositif selon une ou plusieurs des revendications 1 à 10, caractérisé en ce que plusieurs ouvertures réceptrices en forme de fente (20, 21) sont disposées dans la surface de montée (1) en étant espacées les unes à côté des autres et les unes au-dessus des autres.

12. Dispositif selon la revendication 11, caractérisé en ce que les ouvertures réceptrices (21) sont disposées les unes au-dessus des autres avec décalage de telle façon que toute ouverture supérieure soit disposée au-dessus de l'intervalle séparant les ouvertures réceptrices inférieures (21).

13. Dispositif selon une ou plusieurs des revendications 1 à 12, caractérisé en ce que sur le côté du dispositif opposé à la surface de montée (1) est prévu un dispositif d'entraînement.

14. Dispositif selon une ou plusieurs des revendications 1 à 13, caractérisé en ce qu'un dispositif d'aspiration est disposé dans les flotteurs (4) dans la région de décantation de l'huile.

15. Dispositif selon une ou plusieurs des revendications 3 à 14, caractérisé en ce que le bord-déversoir (9) se trouve dans le plan vertical du dispositif s'étendant à travers le métacentre.

16. Procédé pour enlever des substances flottant à la surface de l'eau, en particulier de l'huile, en particulier en utilisant le dispositif selon les revendications 1 à 15, dans lequel on conduit vers le haut l'eau avec les substances flottantes, en particulier avec l'huile qui y flotte, sur une surface de montée, de telle sorte que l'énergie ascensionnelle soit diminuée par la montée de façon que seules les couches d'eau supérieures avec les substances qui se trouvent dedans et/ou dessus soient recueillies à l'extrémité de la surface de montée, le niveau de la surface de montée étant réglé de telle sorte qu'en fonction de la vitesse d'écoulement et de la hauteur de vague un trajet de montée suffisant existe au-dessus de la ligne de liquide réelle, caractérisé en ce qu'une dépression est produite derrière le bord antérieur au-dessus de la région de la surface de montée située au-dessous de la ligne de liquide réelle.

17. Procédé selon la revendication 16, caractérisé en ce que le mélange eau-huile ascendant est guidé sans réflexion dans la région de la surface de montée.

FIG.1

FIG.4

14

6

4

6

11

5

13

2

17

16

FIG.1

3

X

1

9

12

10

13

5

6

11

6

4

14

4

4

1

20

16

22

21

0 072 888

FIG.2

FIG.3